# EUROPEAN PATENT SPECIFICATION

(11) **EP 3 620 489 B1**
(45) Date of publication and mention of the grant of the patent: **19.07.2023**
(21) Application number: 19195947.7
(22) Date of filing: 06.09.2019
(51) Int. Cl.: C08L 51/04, C08L 83/04, C08K 3/013, C08K 5/098, C08K 3/04, C08J 3/22

(54) **ELECTRICALLY CONDUCTIVE RESIN COMPOSITION AND PREPARATION METHOD THEREOF**
ELEKTRISCH LEITFÄHIGE HARZZUSAMMENSETZUNG UND HERSTELLUNGSVERFAHREN DAFÜR
COMPOSITION DE RÉSINE ÉLECTROCONDUCTRICE ET SON PROCÉDÉ DE PRÉPARATION

(30) Priority: 07.09.2018 KR 20180106882
(43) Date of publication of application: 11.03.2020
(73) Proprietor: Korea Kumho Petrochemical Co., Ltd., Seoul 04542 (KR)
(72) Inventor: LEE, Wan Sung, 34048 Daejeon (KR); HWANG, Ho Soo, 34071 Daejeon (KR)
(74) Representative: M. Zardi & Co S.A.

(56) References cited:
- EP-A1- 3 486 281
- KR-A- 20160 103 860
- KR-A- 20180 015 501
- US-A1- 2015 028 267

## Description

### BACKGROUND

### 1. Field of the Invention

The present invention relates to an electrically conductive resin composition and a preparation method thereof, and more particularly to: an electrically conductive resin composition, a masterbatch of which is easy to prepare; and a preparation method thereof.

In addition, the present invention relates to: an electrically conductive resin composition, which exhibits minimized sloughing when molded into a product and contains a well-dispersed electrically conductive filler; and a preparation method thereof.

### 2. Discussion of Related Art

A thermoplastic resin refers to a plastic polymer material that softens and shows plasticity when heated and solidifies when cooled. Since such thermoplastic resins have excellent processability and excellent moldability, they are widely applied to various products such as household products, office automation equipment, electrical and electronic products, automotive parts, and the like.

In addition, attempts have been made to use thermoplastic resins as a high value-added material by imparting special properties to the same according to the types and characteristics of products to which the resins are to be applied.

In particular, when a thermoplastic resin is to be applied to an area in which the resin product is expected to rub against another resin product or other materials and thus be damaged or contaminated due to the generation of static electricity, there is a need to impart electrical conductivity (hereinafter, simply referred to as "conductivity") to the thermoplastic resin.

Conventionally, in order to impart conductivity to a conventional thermoplastic resin as such, conductive fillers such as carbon nanotubes, carbon black, graphite, carbon fibers, metal powder, metal-coated inorganic powder, or metal fibers have been used.

For example, US Patent Registration No. 4478903, Korean Patent Registration No. 10-0330200, and the like disclose a conductive composite material in which carbon black is mixed with a thermoplastic resin such as polystyrene or acrylonitrile butadiene styrene (ABS). However, in this case, due to the use of an excessive amount of carbon black, which is required to impart the required level of conductivity, the inherent mechanical properties of the thermoplastic resin, in particular, impact resistance, may not be sufficiently exhibited.

A masterbatch used in the preparation of a resin composition is a mixture of a thermoplastic resin and a large amount of a filler, and is prepared, using a kneader or an extruder, in advance to better disperse the filler. Masterbatches prepared by introducing only a conductive filler into a conventional thermoplastic resin do not exhibit a sufficient level of dispersion to be usable only by simple dilution. Therefore, there is a disadvantage in that such a masterbatch always requires further extrusion and that products produced therefrom have somewhat low conductivity.

Further examples of electrically conductive resin compositions and corresponding preparation methods are known from EP 3486281 and KR 20180015501.

### SUMMARY OF THE INVENTION

The present invention has been designed to solve the above-described problems of the prior art, and is directed to providing: a conductive resin composition, a masterbatch of which is easy to prepare, and which exhibits minimized sloughing when molded into a product and contains a well-dispersed conductive filler; and a preparation method thereof.

The present invention relates to an electrically conductive resin composition comprising:
a high-impact polystyrene (HIPS) containing a rubber component having an average particle diameter of 1 µm to 5 µm;
an electrically conductive filler;
a lubricant;
and a silicone oil having a kinematic viscosity of 1 cSt to 5 cSt (1 to 5 mPa·s) at 25 °C,
wherein the amount of the silicone oil is 2 wt% to 4 wt% based on the total weight of the electrically conductive resin composition,
wherein the amount of the lubricant is 3 wt% to 6 wt% based on the total weight of the electrically conductive resin composition.

According to one exemplary embodiment, the content of the conductive filler may be 1 wt% to 20 wt% based on the total weight of the conductive resin composition.

According to one exemplary embodiment, the conductive filler may be one selected from the group consisting of a carbon nanotube, a fullerene, graphene, graphite, a carbon fiber, carbon black, and a mixture of two or more of those listed above.

According to one exemplary embodiment, the weight ratio of the conductive filler and the lubricant may be 10:3 to 8.

According to one exemplary embodiment, the lubricant may be one selected from the group consisting of calcium stearate, barium stearate, lead stearate, magnesium stearate, zinc stearate, and a mixture of two or more of those listed above.

According to one exemplary embodiment, the weight ratio of the conductive filler and the silicone oil may be 10:1 to 5.

According to one exemplary embodiment, the silicone oil may be one selected from the group consisting of a dimethyl silicone oil, a methylhydrogen silicone oil, an ester-modified silicone oil, a hydroxy silicone oil, a carbinol-modified silicone oil, a vinyl silicone oil, a silicone acrylate, and a mixture of two or more of those listed above.

The present invention further provides a method of preparing an electrically conductive resin composition, the method comprising:
(a) melt-kneading a mixture of a high-impact polystyrene (HIPS) containing a rubber component having an average particle diameter of 1 µm to 5 µm, a lubricant, and a silicone oil having a kinematic viscosity of 1 cSt to 5 cSt (1 to 5 mPa·s) at 25 °C; and
(b) adding an electrically conductive filler to the product of (a),

wherein the amount of the silicone oil is 2 wt% to 4 wt% based on the total weight of the electrically conductive resin composition,
wherein the amount of the lubricant is 3 wt% to 6 wt% based on the total weight of the electrically conductive resin composition.

According to one exemplary embodiment, the method may further include, after the step (b), a step (c) of diluting the product of the step (b) with a thermoplastic resin.

According to one exemplary embodiment, the thermoplastic resin may be one selected from the group consisting of a styrene-butadiene copolymer, an acrylonitrile-styrene copolymer, polyethylene, polypropylene, polycarbonate, and a mixture of two or more of those listed above.

### DETAILED DESCRIPTION OF EXEMPLARY EMBODIMENTS

Hereinafter, the present invention will be described with reference to exemplary embodiments.

Throughout this specification, when a part is mentioned as being "connected" to another part, this means that the part may not only be "directly connected" to the other part but may also be "indirectly connected" to the other part through another member interposed therebetween. In addition, when a part is mentioned as "including" a specific component, this does not preclude the possibility of the presence of other component(s) in the part but means that the part may further include the other component(s), unless otherwise stated.

When a numerical value is presented herein, the value has the precision of the significant digit provided in accordance with the standard rules in chemistry for significant digits unless its specific range is stated otherwise. For example, the numerical value 10 includes the range of 5.0 to 14.9 and the numerical value 10.0 includes the range of 9.50 to 10.49.

As used herein, the term "kinematic viscosity (v)" refers to the value obtained by dividing the viscosity (η) of a viscous fluid by the density (ρ) of the fluid. Unless otherwise stated, the kinematic viscosity described herein is measured at 25 °C and 1 atm.

As used herein, the term "masterbatch" refers to a dispersion including a large amount of a filler, an additive, and the like used in the preparation of a resin composition, which is prepared in advance. Through the preparation of such a masterbatch, it is possible to improve the dispersibility of the conductive filler in the resin composition and impart uniform conductivity to the entire region of the conductive resin composition.

### Conductive resin composition

The conductive resin composition according to the present invention relates to an electrically conductive resin composition comprising:
a high-impact polystyrene (HIPS) containing a rubber component having an average particle diameter of 1 µm to 5 µm;
an electrically conductive filler;
a lubricant; and
a silicone oil having a kinematic viscosity of 1 cSt to 5 cSt (1 to 5 mPa·s) at 25 °C,
wherein the amount of the silicone oil is 2 wt% to 4 wt% based on the total weight of the electrically conductive resin composition,
wherein the amount of the lubricant is 3 wt% to 6 wt% based on the
total weight of the electrically conductive resin composition.

The above-described conductive resin composition may be considered as a type of masterbatch because it has been prepared by mixing a thermoplastic resin and a large amount of a filler in advance, and the dilution thereof with another raw material can yield a well-dispersed composition. Unlike a conventional masterbatch, which is prepared by mixing only a conductive filler with a polymer resin and needs to be further melt-kneaded and extruded in an extruder prior to mixing with a polymer raw material, the conductive resin composition of the present invention can yield a product having a sufficient level of physical properties and conductivity only by simple dilution.

As used herein, the term "styrene-butadiene copolymer" refers to typical high-impact polystyrene (HIPS) and may be interpreted as a rubber-modified styrene-based copolymer or rubber-modified polystyrene.

The rubber component of the copolymer has an average particle diameter of 1 µm to 5 µm, and the content of butadiene, which is the rubber component, may be 7.5 wt% to 9 wt% based on the total weight of the copolymer. Since the rubber component has a relatively large average particle diameter and the copolymer may be used in the form of a mixture with an excessive amount of a mineral oil (about 3 wt% to 5 wt%) as necessary, high fluidity may be exhibited.

The content of the copolymer may be 70 wt% to 95 wt% and preferably 75 wt% to 90 wt% based on the total weight of the conductive resin composition. In this case, the content of the copolymer may be 70 wt% or more, 72.5 wt% or more, or 75 wt% or more, and 95 wt% or less, 92.5 wt% or less, or 90 wt% or less based on the total weight of the conductive resin composition. When the content of the copolymer is less than 70 wt%, fluidity is lowered, and thus moldability may be lowered. On the other hand, when the content of the copolymer is more than 95 wt%, a molded article produced from the conductive resin composition may have poor mechanical properties.

The conductive resin composition may contain the conductive filler in an amount of 1 wt% to 20 wt% and preferably 1 wt% to 10 wt%. When the conductive filler is used in an amount of less than 1 wt%, the effect of imparting conductivity to the resin or to the molded article may be insignificant. On the other hand, when the conductive filler is used in an amount of more than 20 wt%, the moldability of the resin composition and the mechanical properties of the molded article may be adversely affected because the relative contents of the copolymer, the lubricant, and the silicone oil are reduced or become imbalanced, and dispersibility may be lowered due to the aggregation of the conductive filler.

The conductive filler may be one selected from the group consisting of a carbon nanotube, a fullerene, graphene, graphite, a carbon fiber, carbon black, and a mixture of two or more of those listed above, and is preferably a carbon nanotube in consideration of the ease of kneading with the copolymer, but the present invention is not limited thereto.

The carbon nanotube is a material for imparting conductivity to a copolymer resin having low inherent conductivity, and the addition thereof to a resin composition can yield a molded article that has improved conductivity and improved antistatic properties due to a decrease in surface resistance.

Specifically, when the carbon nanotube is mixed with a copolymer resin, the individual carbon nanotubes form a continuous three-dimensional network structure in the copolymer resin by being dispersed and interconnected, and therefore, excellent conductivity results.

Examples of the method of synthesizing the carbon nanotube include arc-discharge, pyrolysis, laser vaporization, plasma chemical vapor deposition, thermal chemical vapor deposition, and the like, but any type of carbon nanotube may be used regardless of the synthesis method.

In addition, the carbon nanotube may be one selected from the group consisting of single-walled carbon nanotubes, double-walled carbon nanotubes, multi-walled carbon nanotubes (as classified according to the number of walls), cup-stacked carbon nanofiber in which a plurality of truncated conical graphene layers are stacked, and a mixture of two or more of those listed above, and is preferably a multi-walled carbon nanotube in consideration of the great ease of preparation and excellent economic efficiency thereof, but the present invention is not limited thereto.

The carbon nanotube may have an average outer diameter of 8 nm to 50 nm and an average inner diameter which is at least 40% and preferably 40% to 90% of the average outer diameter. Here, the outer diameter refers to the diameter of a cross-section of the carbon nanotube, which is measured by including the graphite layer constituting the wall of the carbon nanotube, and the inner diameter refers to the diameter of a cross-section of a hollow portion of the carbon nanotube, which is measured by excluding the graphite layer.

When a carbon nanotube having an average single-nanotube outer diameter of less than 8 nm or more than 50 nm is used, the average bundle diameter of a carbon nanotube aggregate formed of the individual carbon nanotubes does not fall in the range to be described below, and therefore, it is preferable to use a carbon nanotube having an outer diameter of 8 nm to 50 nm. As used herein, the term "bundle" refers to a carbon nanotube aggregate in the form of a bundle (i.e., a plurality of the carbon nanotubes are arranged side by side) or a rope (i.e., a plurality of the carbon nanotubes are intertwined). On the other hand, a plurality of carbon nanotubes which have been aggregated without forming a regular structure is referred to as a "non-bundle type."

In addition, the higher the carbon content of the carbon nanotube, the fewer the impurities (e.g., a catalyst) in the carbon nanotube, and therefore, higher conductivity can be realized. The carbon content of the carbon nanotube may be 95% or more, preferably 95% to 98%, and more preferably 95% to 97%.

When the purity of carbon in the carbon nanotube is less than 95%, crystallinity may be lowered because a structural defect is induced in the carbon nanotube, and the carbon nanotube may be easily broken and destroyed by external stimuli.

Meanwhile, a bundle-type carbon nanotube aggregate formed of the above-described individual carbon nanotubes may have an average bundle diameter of 1 µm to 10 µm, preferably 1 µm to 5 µm, and more preferably 2 µm to 4 µm, and an average bundle length of 10 µm to 100 µm, preferably 20 µm to 60 µm, and more preferably 25 µm to 55 µm.

When the carbon nanotube aggregate has an average bundle diameter of less than 1 µm or an average bundle length of more than 100 µm, dispersibility is lowered such that the conductive resin composition may not have uniform conductivity throughout the entire region. On the other hand, when the carbon nanotube aggregate has an average bundle diameter of more than 10 µm or an average bundle length of less than 10 µm, as the network structure becomes unstable, conductivity may be lowered.

The content of the lubricant is 3 wt% to 6 wt% based on the total weight of the conductive resin composition When the conductive resin composition is molded, the molded article may have a smooth surface by having a reduced number of bumps due to the lubricant. When the lubricant is used in an amount of less than 1 wt%, the surface properties of the molded article may be adversely affected due to the development of unnecessary bumps on the surface. On the other hand, when the content of the lubricant is more than 8 wt%, conductivity may be lowered.

In particular, the weight ratio of the conductive filler and the lubricant may be 10:3 to 8 and preferably 10:6 to 7. In this case, the lubricant may be used in an amount of 3 or more, 4 or more, 5 or more, or 6 or more, and 8 or less, 7.67 or less, 7.33 or less, or 7.0 or less parts by weight with respect to 10 parts by weight of the conductive filler. When the lubricant is used in an amount of less than 3 parts by weight with respect to 10 parts by weight of the conductive filler, the aggregation of the conductive filler may be induced, and when the lubricant is used in an amount of more than 8 parts by weight with respect to 10 parts by weight of the conductive filler, since the compatibility of the the conductive resin composition is adversely affected, the reliability and reproducibility of a molded article may be significantly lowered due to an increased conductivity variance according to region. On the other hand, when the amount of the lubricant satisfies the above-described weight ratio range, the above-described effect of the lubricant can be maximized.

The lubricant may be one selected from the group consisting of calcium stearate, barium stearate, lead stearate, magnesium stearate, zinc stearate, and a mixture of two or more of those listed above, and is preferably zinc stearate, but the present invention is not limited thereto.

The conductive resin composition contains a silicone oil. The inclusion of a silicone oil in the conductive resin composition may result in a final molded article with improved conductivity due to improved dispersion of the conductive filler. In particular, the conductive resin composition obtained in this case can be used as a masterbatch that requires only dilution and no further extrusion prior to processing thereof for use.

The silicone oil has a kinematic viscosity, at 25 °C, of 1 cSt to 5 cSt (1 to 5 mPa·s). When the silicone oil has a kinematic viscosity of less than 1 cSt, since the compatibility of the silicone oil in the conductive resin composition is decreased, the reliability and reproducibility of a molded article may be lowered due to an increased mechanical property variance, and when the silicone oil has a kinematic viscosity of more than 10 cSt, flowability is reduced such that there may be a difficulty in adding and blending the raw materials for the preparation of the conductive resin composition, and when extruded, the composition may form an extrudate that easily breaks and thus is unsuitable for practical application. On the other hand, when the silicone oil has a kinematic viscosity that falls in the above-described range, since the silicone oil brings an improvement in the dispersibility of the conductive resin composition, a molded article with improved conductivity and suppressed bump formation on the surface thereof is obtained, and the high electrical conductivity of the conductive resin composition can be maintained even in the process of producing a molded article through a high-ratio drawing process.

The silicone oil is used in an amount of 2 wt% to 4 wt% based on the total weight of the conductive resin composition. When the conductive resin composition is subjected to molding, the silicone oil and the lubricant may work together to minimize the formation of bumps, resulting in a molded article with a smooth surface. When the silicone oil is used in an amount of less than 1 wt%, the surface properties of the resulting molded article may be adversely affected due to the development of unnecessary bumps on the surface. On the other hand, when the silicone oil is used in an amount of more than 5 wt%, conductivity may be lowered.

In particular, the weight ratio of the conductive filler and the silicone oil may be 10:1 to 5. When the silicone oil is used in an amount of less than 1 part by weight with respect to 10 parts by weight of the conductive filler, the above-described effect of silicone oil may not be sufficiently realized. On the other hand, when the silicone oil is used in an amount of more than 5 parts by weight with respect to 10 parts by weight of the conductive filler, since the compatibility of the silicone oil in the conductive resin composition is adversely affected, the reliability and reproducibility of a molded article may be significantly lowered due to an increased conductivity variance according to region.

The silicone oil may be one selected from the group consisting of a dimethyl silicone oil, a methylhydrogen silicone oil, an ester-modified silicone oil, a hydroxy silicone oil, a carbinol-modified silicone oil, a vinyl silicone oil, a silicone acrylate, and a mixture of two or more of those listed above, and is preferably a dimethyl silicone oil, but the present invention is not limited thereto.

Sloughing refers to a phenomenon in which the conductive filler is separated during extrusion and transferred to the surface of the molded article, thereby forming large or small bumps on the surface. The occurrence of sloughing leads to the generation of unnecessary dust in the process of producing a product (e.g., a semiconductor, a display, or an automotive electric component) from the conductive resin composition and causes a defect in the product.

The copolymer, the conductive filler, the lubricant, and the silicone oil used in the conductive resin composition have mutually different characteristics and functions. However, when mixed and combined as one, they can bring an improvement in both the moldability and mechanical properties of the conductive resin composition. In addition, since the dispersibility of the conductive filler has been improved, a final molded article having improved reliability and improved reproducibility due to having uniform conductivity throughout the entire region regardless of the shape and structure of the individual regions can be obtained through a molding process. Moreover, it is possible to suppress the sloughing phenomenon in which the random separation of the conductive filler causes unnecessary dust to remain on the surface of the final molded article. In particular, the dispersibility of the conductive filler in the conductive resin composition is maximized when the weight ratio of the lubricant and the silicone oil is 3:2. In this case, a molded article in which excellent conductivity is exhibited and the sloughing phenomenon causing the formation of bumps on the surface has been effectively prevented can be obtained.

The molded article produced from the conductive resin composition may have a specific level of conductivity. For example, the molded article may have a surface resistance of 5.0 Ω/sq to 6.0 Ω/sq.

### Method of preparing conductive resin composition

The method of preparing the electrically conductive resin composition comprises:
(a) melt-kneading a mixture of a high-impact polystyrene (HIPS) containing a rubber component having an average particle diameter of 1 µm to 5 µm, a lubricant, and a silicone oil having a kinematic viscosity of 1 cSt to 5 cSt (1 to 5 mPa·s) at 25 °C; and
(b) adding an electrically conductive filler to the product of (a),

wherein the amount of the silicone oil is 2 wt% to 4 wt% based on the total weight of the electrically conductive resin composition,
wherein the amount of the lubricant is 3 wt% to 6 wt% based on the total weight of the electrically conductive resin composition.

The effects, amounts, and usable types of the copolymer, the conductive filler, the lubricant, and the silicone oil, and the like have been described above.

The conductive resin composition may basically consist of: a polymer resin having a specific level of mechanical properties and moldability; a conductive filler capable of imparting conductivity to the polymer resin, for example, a metal, miscellaneous inorganic materials; and the like. The conductive resin composition can be prepared by mixing the resin and the conductive filler.

There has been proposed a technique of improving the conductivity of the conventional resin composition by increasing the content of the conductive filler. However, when the content of one type of conductive filler (particularly, carbon nanotubes) is increased beyond a specific level, there is a problem in that not only the mechanical properties of the resin itself are not sufficiently exhibited but also processability, workability, and the like are adversely affected. In order to solve this problem, an attempt has been made to increase the total content of conductive filler in the conductive resin composition by using carbon nanotubes in combination with a material such as carbon black, which may be less capable of imparting conductivity than the carbon nanotubes but has higher processability and workability.

However, the above-described method merely adjusts the types and amount of conductive filler differently and is not different from the conventional method in that the mixing of the conductive filler with the resin is performed as a single process. In this regard, in the present invention, a masterbatch containing a required amount of a conductive filler may be prepared by mixing a copolymer containing a rubber component having an average particle diameter of 1 µm to 5 µm, a conductive filler, a lubricant, and a silicone oil having a kinematic viscosity of 1 cSt to 5 cSt (1 to 5 mPa·s) at 25 °C and extruding the mixture.

In this case, the masterbatch may be prepared in the form of spheres, pellets, or the like, but there is no limitation on the form of the masterbatch as long as the masterbatch can be mixed with a polymer the same as or different from the polymer of the masterbatch and with an additive in subsequent steps to improve the dispersibility of the conductive filler.

Meanwhile, the step (a) may be carried out at a temperature of 180 °C to 300 °C, preferably 220 °C to 240 °C, and more preferably 230 °C. When the process temperature of the step (a) is less than 180 °C, since the copolymer is partially melted, the extrusion moldability and dispersibility of the conductive filler may be lowered. On the other hand, when the process temperature of the step (a) is more than 300 °C, the copolymer may be subjected to random thermal decomposition or denaturation.

When the conductive filler is a carbon nanotube, the carbon nanotube may have been obtained by processing powder into pellets by mechanically and physically compressing the same, and may have an apparent density of 0.01 g/ml to 0.2 g/ml and preferably 0.05 g/ml to 0.2 g/ml after the processing. When the apparent density of the carbon nanotube does not fall in the above-described range, it is difficult to prepare a masterbatch which is enriched with carbon nanotubes by containing the carbon nanotubes in an amount of 10 wt% or more. In addition, since the carbon nanotube has been processed into pellets, the generation of airborne dust during operations is prevented, and therefore, an improved working environment can be provided.

Meanwhile, the steps (a) and (b) may be carried out using a kneader or a multi-screw extruder having a plurality of screws, a preferable example of which is a twin-screw extruder having two screws for the uniform mixing of components and extrusion.

In this case, in order to avoid the risk of damaging the conductive filler by the above-described extruder during the kneading process, it may be preferable to perform the melt-kneading of the copolymer, the lubricant, and the silicone oil first by introducing them into the twin-screw extruder using a main hopper and then feed the conductive filler to the extruder using a side feeder to mix the filler with the product of the melt-kneading.

In addition, the conductive resin composition obtained in the step (b) may be extruded at a rate of 10 kg/hr to 500 kg/hr and preferably 10 kg/hr to 30 kg/hr. When the extrusion is carried out at a rate of less than 10 kg/hr, productivity may be lowered. On the other hand, when the extrusion is carried out at a rate of more than 500 kg/hr, uniform mixing of the conductive filler and the copolymer may not be sufficiently realized.

The method of the present invention may further include, after the step (b), a step (c) of diluting ("let-down") the product of the step (b) by mixing the same with a thermoplastic resin. The dilution may be carried out by in-situ polymerization, solution mixing, or the like. A masterbatch prepared by mixing a polymer resin only with a conductive filler needs to be further melt-kneaded and extruded in an extruder prior to mixing with a polymer raw material. On the other hand, the conductive resin composition of the present invention can yield a product having a sufficient level of physical properties and conductivity simply by dilution. The dilution may be alternatively carried out by conventional melt-compounding. The melt-compounding, which allows the conductive filler to be uniformly dispersed in the resin under high-temperature and high-shear conditions using an extruder or the like, enables mass production and a reduction in production costs. The types, features, and selection criteria of the extruder and the like have been described above.

The thermoplastic resin may be one selected from the group consisting of a styrene-butadiene copolymer, an acrylonitrile-styrene copolymer, polyethylene, polypropylene, polycarbonate, and a mixture of two or more of those listed above.

Hereinafter, exemplary embodiments of the present invention will be described in more detail. The effects of each of the various embodiments of the invention which are not explicitly set forth below will be described in detail in relevant sections.

### Examples and Comparative Examples (Examples 1 and 3 are Reference Examples)

A masterbatch was prepared by introducing a multi-walled carbon nanotube (MWCNT or CNT) into a twin-screw extruder through a side feeder, feeding a styrene-butadiene copolymer (HIPS 1, contains a rubber component having an average particle diameter of 3 µm to 4 µm), zinc stearate (Zn-St), and a dimethyl silicone oil (SO) having a kinematic viscosity of 5 cSt, 10 cSt, or 100 cSt into a main hopper at a rate of 25 kg/hr, and then performing melt-kneading at 200 rpm and 230 °C. The mixing ratio of the CNT, the HIPS, the Zn-St, and the SO is shown in the following Table 1.

**[Table 1]**

| Classification | HIPS | CNT | Zn-St | 5 cSt SO | 10 cSt SO | 100 cSt SO |
|---|---|---|---|---|---|---|
| Example 1 | 86 | 10 | 3 | 1 | - | - |
| Example 2 | 85 | 10 | 3 | 2 | - | - |
| Example 3 | 85 | 10 | 3 | - | 2 | - |
| Example 4 | 80 | 10 | 6 | 4 | - | - |
| Comparative Example 1 | 86 | 10 | 3 | - | 1 | - |
| Comparative Example 2 | 80 | 10 | 6 | - | 4 | |
| Comparative Example 3 | 86 | 10 | 3 | - | - | 1 |
| Comparative Example 4 | 85 | 10 | 3 | - | - | 2 |
| Comparative Example 5 | 80 | 10 | 6 | - | - | 4 |
| Comparative Example 6 | 75 | 10 | 9 | 6 | - | - |
| Comparative Example 7 | 75 | 10 | 9 | - | 6 | - |
| Comparative Example 8 | 75 | 10 | 9 | - | - | 6 |
| Comparative Example 9 | 90 | 10 | - | - | - | - |

| | | | | | | |
|---|---|---|---|---|---|---|
| (Units: wt%) | | | | | | |

Each of the masterbatches according to the Examples and the Comparative Examples was mixed with a styrene-butadiene copolymer (HIPS 2, contains a rubber component having an average particle diameter of 0.5 µm to 1.0 µm), a styrene-ethylene-butadiene-styrene rubber, and stearamide to prepare a conductive resin composition having a carbon nanotube content of 2.5 wt%, which was subsequently introduced into an injection machine to produce a sheet-type specimen for measuring physical properties. In addition, the specifications of the raw materials, HIPS 1 and HIPS 2, are shown in the following Table 2, and the characteristics of the conductive resin compositions and sheet-type specimens produced in the Examples and the Comparative Examples are shown in the following Table 3.

**[Table 2]**

| Classification | HIPS 1 | HIPS 2 |
|---|---|---|
| Main resin | Styrene-butadiene copolymer | Styrene-butadiene copolymer |
| Average particle diameter (µm) | 3 to 4 | 0.5 to 1.0 |
| Rubber (wt%) | 8.3 | 8.0 |
| Mineral oil (wt%) | 4.3 | 1.0 |
| Tensile strength (kgf/cm², 6 mm) | 260 | 370 |
| Elongation (%, 6 mm) | 40 | 55 |
| Impact strength (kg·cm/cm, 3.2 mm) | 9 | 12 |
| Melt index (g/10 min, 200 °C, 5 kg) | 9 | 4 |
| Flexural strength (kgf/cm², 2.8 mm) | 300 | 500 |
| Light transmittance (%) | - | - |

**[Table 3]**

| Classification | Applicability of masterbatch preparation | Surface resistance of masterbatch (Ω/sq, log) | Surface resistance of specimen (Ω/sq, log) | Surface bumps |
|---|---|---|---|---|
| Example 1 | Possible | 1.0 | 6.0 | A few |
| Example 2 | Possible | 1.0 | 5.0 | None |
| Example 3 | Possible | 1.0 | 5.5 | A few |
| Example 4 | Possible | 1.0 | 5.1 | None |
| Comparative Example 1 | Possible | 1.0 | 6.0 | Many |
| Comparative Example 2 | Possible | 1.0 | 5.4 | Many |
| Comparative Example 3 | Possible | 1.0 | 6.0 | Many |
| Comparative Example 4 | Poor | 1.0 | 5.8 | Many |
| Comparative Example 5 | Impossible | - | - | - |
| Comparative Example 6 | Impossible | - | - | - |
| Comparative Example 7 | Impossible | - | - | - |
| Comparative Example 8 | Impossible | - | - | - |
| Comparative Example 9 | Possible | 1.0 | 7.0 | Excessive |

Referring to Table 3, in the case of the composition of Comparative Example 9, it was possible to prepare a masterbatch which did not contain additives and thus consisted of only a copolymer and a conductive filler. However, the specimen produced in Comparative Example 9 had a surface resistance of 7.0 Ω/sq, and it was observed that it had an excessive number of bumps on its surface.

In the case of the compositions of Comparative Examples 1 to 3, it was possible to prepare a masterbatch which contained a silicone oil with relatively high viscosity and a lubricant as additives, and the specimens produced therefrom had a surface resistance of 5.4 Ω/sq to 6.0 Ω/sq, suggesting that Comparative Examples 1 to 3 may be easily applicable. However, it was observed that the specimens had a large number of bumps on their surfaces.

In the case of the compositions of Comparative Examples 4 to 8, where an excessive amount of additives were used, since poor flowability was exhibited during the preparation of a masterbatch due to the high viscosity of the silicone oil or there was a difficulty in kneading the raw materials, it was difficult or substantially impossible to prepare a masterbatch, and therefore, Comparative Examples 4 to 8 will not be applicable.

On the other hand, in the case of the compositions of Examples 1 to 4, it was easy to prepare a masterbatch, a surface resistance of 5.0 Ω/sq to 6.0 Ω/sq was exhibited, which suggests that Examples 1 to 4 may be applicable, and the specimens had only a small number of bumps or even no bump on the surface. In particular, in the case of the compositions of Examples 2 and 4, where a silicone oil having a kinematic viscosity of 5 cSt was used and a lubricant-to-silicone oil weight ratio was 3:2, an excellent conductivity of 5.0 Ω/sq to 5.1 Ω/sq was exhibited, and it was observed that the specimens had no bumps on the surface.

The conductive resin composition according to one aspect of the present invention can exhibit minimized sloughing when molded into a product, and contains a well-dispersed conductive filler.

Since a molded article produced from the conductive resin composition exhibits uniform conductivity throughout the entire surface thereof and also exhibits excellent sloughing resistance, the application area thereof can be further extended to include not only general products but also more precise products, parts, or the like which are vulnerable to dust.

In addition, since the method of preparing a conductive resin composition according to another aspect of the present invention provides a well-dispersed conductive resin composition, it is possible to produce various desired products simply by diluting the conductive resin composition with a thermoplastic resin.

## Claims

1. An electrically conductive resin composition comprising:
a high-impact polystyrene (HIPS) containing a rubber component having an average particle diameter of 1 µm to 5 µm;
an electrically conductive filler;
a lubricant; and
a silicone oil having a kinematic viscosity of 1 cSt to 5 cSt (1 to 5 mPa·s) at 25 °C,
wherein the amount of the silicone oil is 2 wt% to 4 wt% based on the total weight of the electrically conductive resin composition,
wherein the amount of the lubricant is 3 wt% to 6 wt% based on the total weight of the electrically conductive resin composition.

2. The electrically conductive resin composition of claim 1, which contains the electrically conductive filler in an amount of 1 wt% to 20 wt% based on the total weight of the electrically conductive resin composition.

3. The electrically conductive resin composition of claim 1, wherein the electrically conductive filler is one selected from the group consisting of a carbon nanotube, a fullerene, graphene, graphite, a carbon fiber, carbon black, and a mixture of two or more thereof.

4. The electrically conductive resin composition of claim 1, wherein the electrically conductive filler and the lubricant are mixed in a weight ratio of 10:3 to 8.

5. The electrically conductive resin composition of claim 1, wherein the lubricant is one selected from the group consisting of calcium stearate, barium stearate, lead stearate, magnesium stearate, zinc stearate, and a mixture of two or more thereof.

6. The electrically conductive resin composition of claim 1, which contains the silicone oil in an amount of 1 wt% to 5 wt% based on the total weight of the electrically conductive resin composition.

7. The electrically conductive resin composition of claim 1, wherein the electrically conductive filler and the silicone oil are mixed in a weight ratio of 10:1 to 5.

8. The electrically conductive resin composition of claim 1, wherein the silicone oil is one selected from the group consisting of a dimethyl silicone oil, a methylhydrogen silicone oil, an ester-modified silicone oil, a hydroxy silicone oil, a carbinol-modified silicone oil, a vinyl silicone oil, a silicone acrylate, and a mixture of two or more thereof.

9. A method of preparing an electrically conductive resin composition according to claim1, the method comprising:
(a) melt-kneading a mixture of a high-impact polystyrene (HIPS) containing a rubber component having an average particle diameter of 1 µm to 5 µm, a lubricant, and a silicone oil having a kinematic viscosity of 1 cSt to 5 cSt (1 to 5 mPa·s) at 25 °C; and
(b) adding an electrically conductive filler to the product of (a),
wherein the amount of the silicone oil is 2 wt% to 4 wt% based on the total weight of the electrically conductive resin composition,
wherein the amount of the lubricant is 3 wt% to 6 wt% based on the total weight of the electrically conductive resin composition.

10. The method of claim 9, further comprising, after (b), (c) diluting the product of (b) with a thermoplastic resin.

11. The method of claim 10, wherein the thermoplastic resin is one selected from the group consisting of a styrene-butadiene copolymer, an acrylonitrile-styrene copolymer, polyethylene, polypropylene, polycarbonate, and a mixture of two or more thereof.

## Patentansprüche

1. Elektrisch leitfähige Harzzusammensetzung umfassend:
ein hochschlagfestes Polystyrol (*high-impact polystyrene*; HIPS), das eine Kautschukkomponente enthält, die einen durchschnittlichen Partikeldurchmesser von 1 µm bis 5 µm aufweist;
einen elektrisch leitfähigen Füllstoff;
ein Schmiermittel; und
ein Silikonöl, das eine kinematische Viskosität von 1 cSt bis 5 cSt (1 bis 5 mPa·s) bei 25 °C aufweist;
wobei die Menge des Silikonöls 2 Gew.-% bis 4 Gew.-% basierend auf dem Gesamtgewicht der elektrisch leitfähigen Harzzusammensetzung ist,
wobei die Menge des Schmiermittels 3 Gew.-% bis 6 Gew.-% basierend auf dem Gesamtgewicht der elektrisch leitfähigen Harzzusammensetzung ist.

2. Elektrisch leitfähige Harzzusammensetzung nach Anspruch 1, die den elektrisch leitfähigen Füllstoff in einer Menge von 1 Gew.-% bis 20 Gew.-% basierend auf dem Gesamtgewicht der elektrisch leitfähigen Harzzusammensetzung enthält.

3. Elektrisch leitfähige Harzzusammensetzung nach Anspruch 1, wobei der elektrisch leitfähige Füllstoff einer ist, der aus der Gruppe ausgewählt ist, die aus einer Kohlenstoffnanoröhre, einem Fulleren, Graphen, Graphit, einer Kohlenstofffaser, Rußschwarz und einer Mischung aus zwei oder mehr von diesen besteht.

4. Elektrisch leitfähige Harzzusammensetzung nach Anspruch 1, wobei der elektrisch leitfähige Füllstoff und das Schmiermittel in einem Gewichtsverhältnis von 10:3 bis 8 gemischt sind.

5. Elektrisch leitfähige Harzzusammensetzung nach Anspruch 1, wobei das Schmiermittel eines ist, das aus der Gruppe ausgewählt ist, die aus Kalziumstearat, Bariumstearat, Bleistearat, Magnesiumstearat, Zinkstearat, und einer Mischung aus zwei oder mehr von diesen besteht.

6. Elektrisch leitfähige Harzzusammensetzung nach Anspruch 1, die das Silikonöl in einer Menge von 1 Gew.-% bis 5 Gew.-% basierend auf dem Gesamtgewicht der elektrisch leitfähigen Harzzusammensetzung enthält.

7. Elektrisch leitfähige Harzzusammensetzung nach Anspruch 1, wobei der elektrisch leitfähige Füllstoff und das Silikonöl in einem Gewichtsverhältnis von 10:1 bis 5 gemischt sind.

8. Elektrisch leitfähige Harzzusammensetzung nach Anspruch 1, wobei das Silikonöl eines ist, das aus der Gruppe ausgewählt ist, die aus einem Dimethylsilikonöl, einem Methylwasserstoffsilikonöl, einem Ester-modifizierten Silikonöl, einem Hydroxysilikonöl, einem Karbinol-modifizierten Silikonöl, einem Vinylsilikonöl, einem Silikonacrylat, und einer Mischung von zwei oder mehr von diesen besteht.

9. Verfahren zum Zubereiten einer elektrisch leitfähigen Harzzusammensetzung nach Anspruch 1, wobei das Verfahren umfasst:
(a) Schmelzkneten einer Mischung eines hochschlagfesten Polystyrols (*high-impact polystyrene;* HIPS), das eine Kautschukkomponente enthält, die einen durchschnittlichen Partikeldurchmesser von 1 µm bis 5 µm aufweist, eines Schmiermittels, und eines Silikonöls, das eine kinematische Viskosität von 1 cSt bis 5 cSt (1 bis 5 mPa·s) bei 25 °C aufweist; und
(b) Hinzufügen eines elektrisch leitfähigen Füllstoffs zu dem Produkt von (a),
wobei die Menge des Silikonöls 2 Gew.-% bis 4 Gew.-% basierend auf dem Gesamtgewicht der elektrisch leitfähigen Harzzusammensetzung ist,
wobei die Menge des Schmiermittels 3 Gew.-% bis 6 Gew.-% basierend auf dem Gesamtgewicht der elektrisch leitfähigen Harzzusammensetzung ist.

10. Verfahren nach Anspruch 9, ferner umfassend, nach (b), (c) Verdünnen des Produkts von (b) mit einem thermoplastischen Harz.

11. Verfahren nach Anspruch 10, wobei das thermoplastische Harz eines ist, das aus der Gruppe ausgewählt ist, die aus einem Styrol-Butadien-Copolymer, einem Acrylnitril-Styrol-Copolymer, Polyethylen, Polypropylen, Polykarbonat, und einer Mischung von zwei oder mehr von diesen besteht.

## Revendications

1. Composition de résine électriquement conductrice comprenant :
un polystyrène choc (HIPS) contenant un composant en caoutchouc ayant un diamètre particulaire moyen de 1 µm à 5 µm ;
une charge de remplissage électriquement conductrice ;
un lubrifiant ; et
une huile de silicone ayant une viscosité cinématique de 1 cSt à 5 cSt (1 à 5 mPa.s) à 25 °C,
dans laquelle la quantité de l'huile de silicone est de 2 % en poids à 4 % en poids sur la base du poids total de la composition de résine électriquement conductrice,
dans laquelle la quantité du lubrifiant est de 3 % en poids à 6 % en poids sur la base du poids total de la composition de résine électriquement conductrice.

2. Composition de résine électriquement conductrice selon la revendication 1, qui contient la charge de remplissage électriquement conductrice en quantité de 1 % en poids à 20 % en poids sur la base du poids total de la composition de résine électriquement conductrice.

3. Composition de résine électriquement conductrice selon la revendication 1, dans laquelle la charge de remplissage électriquement conductrice est une charge sélectionnée parmi le groupe constitué d'un nanotube de carbone, d'un fullerène, du graphène, du graphite, d'une fibre de carbone, du noir de carbone et d'un mélange de deux ou plus de ceux-ci.

4. Composition de résine électriquement conductrice selon la revendication 1, dans laquelle la charge de remplissage électriquement conductrice et le lubrifiant sont mélangés selon un rapport en poids de 10:3 à 8.

5. Composition de résine électriquement conductrice selon la revendication 1, dans laquelle le lubrifiant est un lubrifiant sélectionné parmi le groupe constitué du stéarate de calcium, du stéarate de baryum, du stéarate de plomb, du stéarate de magnésium, du stéarate de zinc et d'un mélange de deux ou plus de ceux-ci.

6. Composition de résine électriquement conductrice selon la revendication 1, qui contient l'huile de silicone en quantité de 1 % en poids à 5 % en poids sur la base du poids total de la composition de résine électriquement conductrice.

7. Composition de résine électriquement conductrice selon la revendication 1, dans laquelle la charge de remplissage électriquement conductrice et l'huile de silicone sont mélangées selon un rapport en poids de 10:1 à 5.

8. Composition de résine électriquement conductrice selon la revendication 1, dans laquelle l'huile de silicone est une huile de silicone sélectionnée parmi le groupe constitué d'une huile de silicone diméthylique, d'une huile de silicone méthylhydrogénée, d'une huile de silicone modifiée par ester, d'une huile de silicone hydroxylée, d'une huile de silicone modifiée par carbinol, d'une huile de silicone vinylique, d'un acrylate de silicone et d'un mélange de deux ou plus de ceux-ci.

9. Procédé de préparation d'une composition de résine électriquement conductrice selon la revendication 1, le procédé comprenant :
(a) le malaxage à l'état fondu d'un mélange d'un polystyrène choc (HIPS) contenant un composant en caoutchouc ayant un diamètre particulaire moyen de 1 µm à 5 µm, d'un lubrifiant, et d'une huile de silicone ayant une viscosité cinématique de 1 cSt à 5 cSt (1 à 5 mPa.s) à 25 °C ; et
(b) l'ajout d'une charge de remplissage électriquement conductrice au produit de (a),
dans lequel la quantité de l'huile de silicone est de 2 % en poids à 4 % en poids sur la base du poids total de la composition de résine électriquement conductrice,
dans lequel la quantité du lubrifiant est de 3 % en poids à 6 % en poids sur la base du poids total de la composition de résine électriquement conductrice.

10. Procédé selon la revendication 9, comprenant en outre, après (b), (c) la dilution du produit de (b) avec une résine thermoplastique.

11. Procédé selon la revendication 10, dans lequel la résine thermoplastique est une résine thermoplastique sélectionnée parmi le groupe constitué d'un copolymère styrène-butadiène, d'un copolymère acrylonitrile-styrène, du polyéthylène, du polypropylène, du polycarbonate et d'un mélange de deux ou plus de ceux-Cl.
